Europäisches Patentamt

European Patent Office

Office européen des brevets

(11) Publication number: **0 138 790**
**B1**

(12) EUROPEAN PATENT SPECIFICATION

(45) Date of publication of patent specification: **14.12.88**

(21) Application number: **84850275.3**

(22) Date of filing: **18.09.84**

(51) Int. Cl.⁴: **H 01 G 9/10,** H 01 G 1/02,
H 01 M 2/04

(54) Arrangement for the closure of an opening in a casing for electrical components, particularly capacitors.

(30) Priority: **04.10.83 SE 8305428**

(43) Date of publication of application:
**24.04.85 Bulletin 85/17**

(45) Publication of the grant of the patent:
**14.12.88 Bulletin 88/50**

(84) Designated Contracting States:
**DE FR GB IT NL**

(56) References cited:
**CH-A- 489 102**
**DE-A-2 343 075**
**DE-B-1 104 615**
**US-A-3 243 316**
**US-A-3 341 751**
**US-A-3 502 948**

(73) Proprietor: **RIFA AB**
**Box 945**
**S-391 29 KALMAR (SE)**

(72) Inventor: **Ulming, Lennart Evald**
**Röttle**
**S-563 00 Gränna (SE)**
Inventor: **Rundlöf, Björn Arnold**
**Radmansgatan 30**
**S-563 00 Gränna (SE)**

(74) Representative: **Nydell, Peder**
**Nydells Patentbyra Storgatan 57**
**S-392 31 Kalmar (SE)**

## Description

### Technical Field

The present invention relates to an arrangement for the closure of an opening in a casing for electrical components, particularly capacitors, including a lid provided with a sealing ring, the lid engaging against an interior abutment in the casing.

### Background Art

In the type of casing mentioned here, there is often a need of the closure means being locked in place in a manner such that is has extremely good sealing. This is the case, inter alia, for electrolyte capacitor casings, which much not leak. Closure means known up to now have an unsatisfactory sealing function, particularly in the cases where the casing is subjected to high working temperatures, shocks or vibrations. In such cases the sealing elements used have been able to flex, the lid then lifting so that electrolyte leaks out and reduces the operational reliability of the capacitor.

In the US patent no 3.502.984 is shown an electrolytic capacitor with a cylindrical, metallic casing and a lid. The lid is of plastic material and has two grooves with each a rubber sealing ring. The casing has a peripheral local introduction indentation compressing one of the sealing rings in its groove. The arrangement has the disadvantage that the lid can be displaced in axial direction under deformation of the sealing rings when subject to mechanical stress. This displacement can cause leakage and the arrangement is also rather complicated.

### Disclosure of Invention

The object of the present invention is therefore to provide a heat-, shock-, and vibration-proof closure arrangement of the kind given in the introduction.

This is obtained by the arrangement according to the invention having been given the characterizing features disclosed in the appended claim.

### Brief Decription of Drawing

The invention is described in detail below with reference to the accompanying drawings, where

Figure 1 is a partial section through a preferred embodiment of the invention, and

Figure 2 is a partial section through a modified embodiment of the invention.

### Best Mode for Carrying Out the Invention

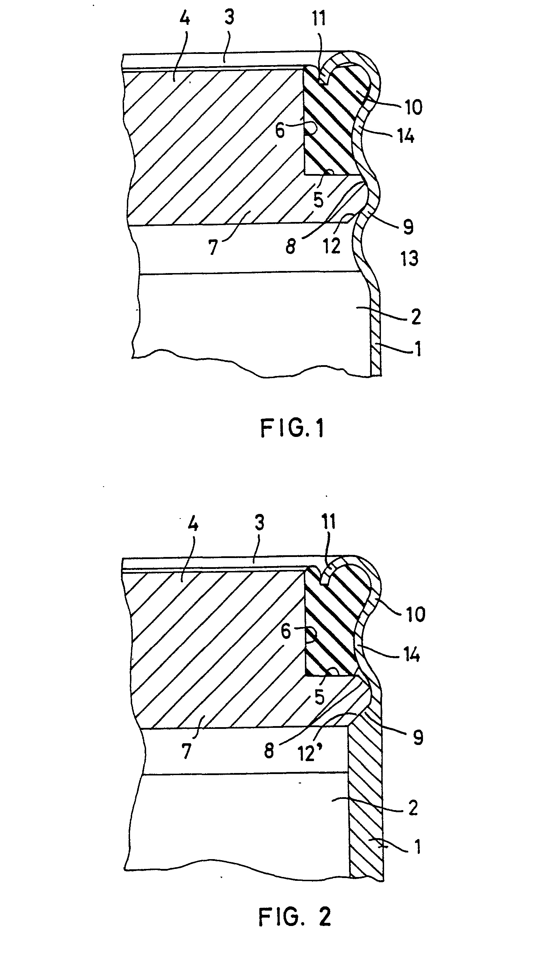

Figure 1 is a partial section of a protective casing or jacket 1 for a schematically indicated electrolyte capacitor 2. The casing 1, which is preferably of metal, e.g. aluminium, has the form of a cylindrical body open at one end 3 (the upper end in figures 1 and 2), this opening being closed with the aid of a circular lid 4 of plastics or metallic material.

On its upper face the lid 4 has a peripheral, annular recess 5, 6 of substantially rectangular cross-section. The recess is formed by an annular bottom wall 5 in a plane substantially parallel to that of the lid, and a cylindrical side wall 6 forming an angle of about 90° with the bottom wall 5.

Although the angle between the walls 5 and 6 in the illustrated, preferred embodiment is about 90°, it is obvious that the angle can deviate more or les from 90°.

The bottom wall 5 consitutes the upper face of a radial flange 7. The upper and lower edges of this flange are chamfered about 45° to form two inclined abutment surfaces 8 and 9, which engage against the wall of the casing.

An elastically or plastically deformable sealing ring 10, which may be of rubber or plastics, is inserted in the recess 5, 6 for engagement against the walls 5 and 6 thereof. The sealing ring 10 is retained in the recess by a folded-over edge 11 of the casing 1.

The casing 1 has an interior, substantially annular abutment surface 12, which sealingly engages against the lower abutment surface 9 of the flange 7. The abutment 12 is provided by a portion 13 of the casing is impressed along its circumference, suitably as a so-called bead.

The casing 1 also has an impression along a circumferential portion 14 directly opposite the sealing ring 10, suitably in the form of a second bead. The ring 10 is thus compressed so that is forms a pressure-transmitting mass pressing against both walls 5 and 6, i.e. both radially and axially, which results in urging the lid against the interior abutment 12 in the casing 1.

In Figure 2, the casing 1 has enlarged wall thickness below the lid 4. The transition between the differently thick portions of the casing forms an interior abutment 12', which conically diverges away from the opening 3. The abutment 12' corresponds to the abutment 12 in Figure 1. By the conicity of the abutment 12' there is obtained a cuneiform jointing effect between surface 9 and the abutment 12'.

With the aid of the illustrated and described embodiments there is obtained a very reliable clamping of the lid as well as an improved sealing function in both axial and radial directions.

### Claim

Arrangement for the closure of an open side of a casing for electrical components, particularly capacitors, with the aid of a lid having a peripherally projecting flange and a sealing ring surrounding the lid, the casing being provided with a peripherally extending through-like portion with convex section seen from within the casing, said portion engaging against the sealing ring and uring it in a radial direction towards the lid, characterized in that the casing (1) is also provided with a peripherally extending trough-like portion (12) with a concave section seen from within the casing for gripping round the flange (7) and retaining it against displacement in the casing in both an axial as well as a radial direction.

**Patentanspruch**

Verschlussvorrichtung für die offene Seite eines Gehäuses für elektrische Bauelemente, insbesondere Kondensatoren, mit Hilfe einer Abdeckung, die einen umfangsseitigen, vorstehenden Flansch, sowie einen die Abdeckung umgebenden Dichtungsring aufweist, wobei das Gehäuse mit sich einen umfangsseitig erstreckenden, trogähnlichen Abschnitt mit einem, gesehen vom Gehäuse, konvexen Bereich ausgestattet ist, und der Bereich sich gegen den Dichtungsring legt und ihn in einer radialen Richtung gegen die Abdeckung drückt, dadurch gekennzeichnet, dass das Gehäuse (1) ferner mit einem sich umfangsseitig erstreckenden, trogähnlichen Abschnitt (12) ausgestattet ist, der, gesehen vom Inneren des Gehäuses, einen konkaven Abschnitt aufweist, um den Flansch (7) zu umgreifen und ihn gegen eine Verschiebung im Gehäuse sowohl in Axialrichtung als auch in Radialrichtung zu halten.

**Revendication**

Dispositif pour fermer un côté ouvert d'un boîtier pour composants électriques, en particulier des condensateurs, à l'aide d'un couvercle comportant une bride faisant saillie à périphérie et une bague d'étachéité entourant le couvercle, le boîtier comportant une partie périphérique, analogue à une gouttière, ayant une portion convexe vue de l'intérieur du boîtier, ladite partie portant contre la bague d'étanchéité et la repoussant dans und direction radiale vers le couvercle, caractérisé en ce que le boîtier (1) comporte également une partie périphérique (12) analogue à une gouttière, ayant une portion concave vue de l'intérieur de boîtier, pour établir une prise autour de la bride (7) et l'empêcher de se déplacer dans las boîtier dans une direction axiale aussi bien que dans une direction radiale.

FIG. 1

FIG. 2